# EUROPEAN PATENT APPLICATION

(11) **EP 2 394 772 A1**
(43) Date of publication of application: **14.12.2011**
(21) Application number: 11169083.0
(22) Date of filing: 08.06.2011
(51) Int. Cl.: B23K 9/167, B23K 9/32, B23K 35/30

(54) **Apparatus and method for dissimilar welding of alloy steel**

(30) Priority: 09.06.2010 US 797130
(71) Applicant: General Electric Company, Schenectady, NY 12345 (US)
(72) Inventor: Breitenbach, Steven Louis, Schenectady, NY New York 12345 (US); Babcock, William Edward, Schenectady, NY New York 12345 (US); Silvia, Alan Joseph, Clifton Park, NY New York 12065 (US)
(74) Representative: Szary, Anne Catherine

(57) **Abstract**

A weld joint 12 includes low and high alloy steel components 14, 16. A weld bead between the low and high alloy steel components 14, 16 includes a first weld wire 18 in contact with the low alloy steel component 14, a second weld wire 20 in contact with the high alloy steel component 16, and a third weld wire 22 between the first and second weld wires 18, 20. The third weld wire 22 has a higher percentage of chromium than the first weld wire 18 and a lower percentage of chromium than the second weld wire 20. A method for welding includes applying a first weld wire 18 to a low alloy steel component 14, applying a second weld wire 20 to a high alloy steel component 16, and applying a third weld wire 22 between the first and second weld wires 18, 20. The third weld wire 22 has a higher percentage of chromium than the first weld wire 18 and a lower percentage of chromium than the second weld wire 20.

## Description

### FIELD OF THE INVENTION

The present invention relates generally to devices and methods for welding alloy steel components having different compositions, in particular, alloy steel components having different levels of chromium content.

### BACKGROUND OF THE INVENTION

Alloy steel is a combination of iron and up to 70% by weight alloying elements such as nickel, chromium, molybdenum, manganese, vanadium, silicon, and/or boron. In general, alloy steels have greater strength, hardness, hot hardness, wear resistance, hardenability, and/or toughness than carbon steels. Alloy steels are further characterized by the amount of alloy added. A subset of the alloy steel family is low alloy steels which typically having less than approximately 5% by weight of alloying elements. NiCrMoV and CrMoV alloy steels, examples of low alloy steels, are often used in rotors, flanges, wheels, and disk applications included in a steam turbine. High alloy steels devise a second subset of the alloy steel family and typically have greater than approximately 5% by weight alloying elements. Stainless steel is a particular type of high alloy steel which contains equal to or greater than approximately 9-12% by weight chromium.

The need often arises in various commercial applications for welding a low alloy steel component to a high alloy steel component. For example, a steam turbine may include a rotor that extends continuously along the length of the steam turbine. Where possible, less expensive low alloy steels may be used for the rotor. However, high alloy steels may be desirable for those portions of the rotor that experience higher temperatures. As a result, the rotor often includes sections of low alloy steel welded to sections of high alloy steel to produce a single rotor assembly.

As is known in the art, carbon diffusion or carbon segregation occurs across a weld interface between low alloy steel and high alloy steel having different chromium levels. The amount of carbon diffusion or carbon segregation across the weld interface is directly proportional to the chromium gradient across the weld interface. Specifically, carbon diffuses from the low alloy steel having a lower chromium content across the weld interface to the high alloy steel having a higher chromium content when the weld joint is exposed to an elevated temperature, such as, for example, during post-weld heat treatment or during operating service. This carbon diffusion or carbon segregation results in a decarburized region on one side of the weld interface and a carburized region on the other side of the weld interface. For an assembly where a low alloy steel (low chromium level) component is welded to a high alloy steel (high chromium level) component using a low alloy steel weld wire (low chromium level), the interface where carbon diffusion takes place is the weld interface between the low alloy steel weld deposit and the high alloy base material where is the chromium gradient is the greatest. Similar carbon diffusion or carbon segregation results where a low alloy steel (low chromium level) component is welded to a high alloy steel component (high chromium level) using a high alloy steel weld wire (high chromium level). The interface where carbon diffusion takes place is the interface between the low alloy steel (low chromium level) base material and the high alloy steel (high chromium level) weld deposit where the chromium gradient is the greatest. In this case, the decarburized zone forms in the low alloy steel base material and the carburized zone forms in the high alloy (higher chromium level) weld deposit. The decarburized and carburized regions adversely affect the strength and creep characteristics of the weld joint.

Attempts have been made to reduce the carbon diffusion or carbon segregation that occurs across a weld joint. For example, cladding may be applied to one or both of the alloy steel components to reduce the chromium gradient between the alloy steel components. The clad component(s) may then be welded together, as described for example in U.S. Patent Publication 2005/0255333. However, this process requires the time consuming application and subsequent tempering of the cladding on the alloy steel component before welding the alloy steel components together. Therefore, a weld joint that addresses carbon diffusion or carbon segregation across a weld joint between alloy steel components without requiring the addition of cladding to the components would be desirable.

### BRIEF DESCRIPTION OF THE INVENTION

Aspects and advantages of the invention are set forth below in the following description, or may be obvious from the description, or may be learned through practice of the invention.

One embodiment of the present invention is a weld joint that includes a low alloy steel component having less than approximately 4% chromium by weight and a high alloy steel component having more than approximately 9% chromium by weight. A weld bead between the low and high alloy steel components includes a first weld wire in contact with the low alloy steel component, a second weld wire in contact with the high alloy steel component, and a third weld wire between the first and second weld wires. The third weld wire has a higher percentage of chromium by weight than the first weld wire and a lower percentage of chromium by weight than the second weld wire.

Another embodiment of the present invention is a weld joint that includes a low alloy steel component, a high alloy steel component, a chromium gradient between the low alloy steel component and the high alloy steel component, and a means for reducing the chromium gradient between the low alloy steel component and the high alloy steel component.

A still further embodiment of the present invention is a method for welding that includes applying a first weld wire to a low alloy steel component, wherein the first weld wire has a higher percentage of chromium by weight than the low alloy steel component. The method further includes applying a second weld wire to a high alloy steel component, wherein the second weld wire has a lower percentage of chromium by weight than the high alloy steel component. The method also includes applying a third weld wire between the first and second weld wires, wherein the third weld wire has a higher percentage of chromium by weight than the first weld wire and a lower percentage of chromium by weight than the second weld wire.

Those of ordinary skill in the art will better appreciate the features and aspects of such embodiments, and others, upon review of the specification.

### BRIEF DESCRIPTION OF THE DRAWINGS

A full and enabling disclosure of the present invention, including the best mode thereof to one skilled in the art, is set forth more particularly in the remainder of the specification, including reference to the accompanying figures, by way of example, in which:
Figure 1 shows a simplified partial cross-section of a rotor for a steam turbine;
Figure 2 shows a weld joint according to one embodiment of the present invention; and
Figure 3 shows a weld joint according to an alternate embodiment of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

Each example is provided by way of explanation of the invention, not limitation of the invention. In fact, it will be apparent to those skilled in the art that modifications and variations can be made in the present invention without departing from the scope thereof. For instance, features illustrated or described as part of one embodiment may be used on another embodiment to yield a still further embodiment. Thus, it is intended that the present invention covers such modifications and variations as come within the scope of the appended claims and their equivalents.

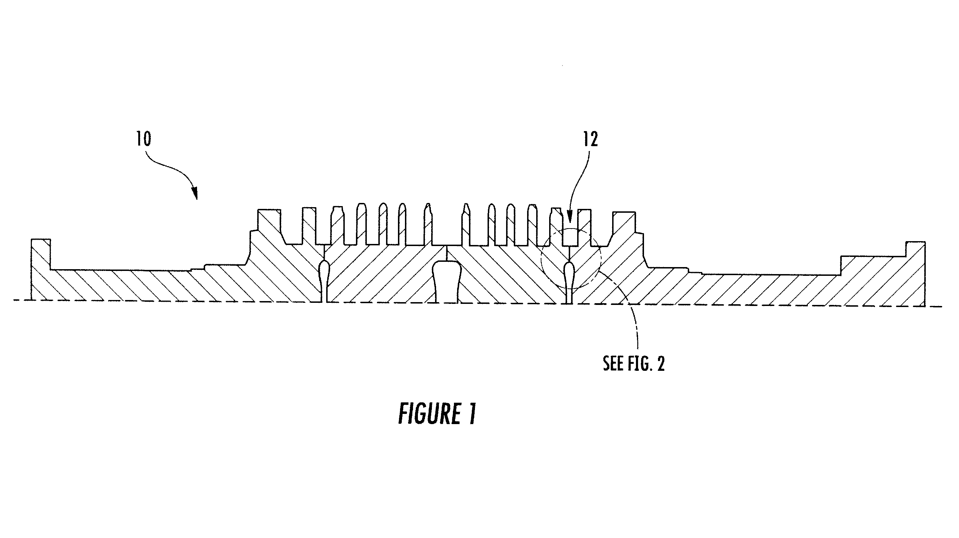

Embodiments of the present invention provide various devices and methods for reducing carbon diffusion or segregation across weld joints between alloy steel components. For example, Figure 1 shows a simplified partial cross-section of a rotor 10 for a steam turbine comprised of two materials; a low alloy steel component 14 (with low chromium levels) and a high alloy steel component 16 (with high chromium levels). Figure 1 provides a sample environment for illustrating and describing various aspects of embodiments within the scope of the present invention. Although described and illustrated in the context of a rotor, one of ordinary skill in the art will readily appreciate that the present invention is not limited to any particular device and may be employed in virtually any weld joint between low alloy steel and high alloy steel components.

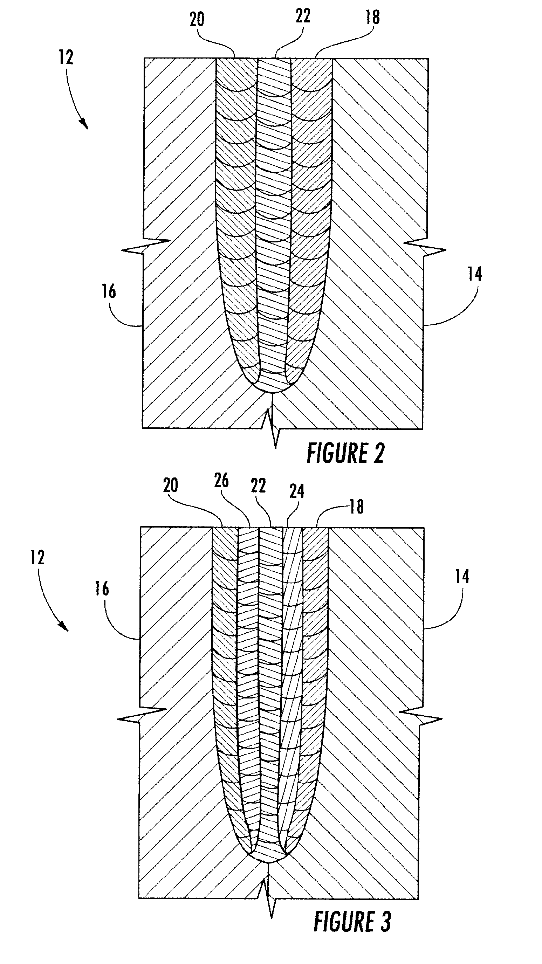

Figures 2 and 3 show an enlarged view of a weld joint 12, such as the weld joint 12 within the circle in Figure 1, according to various embodiments of the present invention. As shown in each figure, the weld joint 12 is between a low alloy steel component 14 and a high alloy steel component 16. As used herein, low alloy steel is defined as a combination of iron and less than 5% by weight alloying elements such as nickel, chromium, molybdenum, manganese, vanadium, silicon, and/or boron. For example, 2% CrMoNiWV is a low alloy steel that includes 0.20-0.25% by weight carbon, 0.65-0.85% by weight nickel, 2.00-2.5% by weight chromium, 0.75-0.95% by weight molybdenum, 0.25-0.35% by weight vanadium, and 0.60-0.70% by weight tungsten. As another example, 1.25% CrMoV is a low alloy steel that includes 0.25-0.33% by weight carbon, 0.30-0.60% by weight nickel, 0.90-1.30% by weight chromium, 1.00-1.50% by weight molybdenum, and 0.20-0.30% by weight vanadium. As used herein, high alloy steel is defined as a combination of iron and more than 5% by weight alloying elements. For example, one composition of high alloy steel may include 0.10-0.15% by weight carbon, 0.60-0.80% by weight nickel, 10.0-12.0% by weight chromium, 1.00-1.20% by weight molybdenum, 0.15-0.25% by weight vanadium, 0.95-1.10% by weight tungsten, 0.04-0.07% by weight niobium, and 0.04-0.07% by weight nitrogen. As used herein, stainless steel is defined as high alloy steel having more than approximately 9.0% by weight chromium.

Each weld joint 12 includes means for reducing the chromium gradient between the low alloy steel component 14 and the high alloy steel component 16. The means for reducing the chromium gradient may include a plurality of weld wires having gradually increasing percentages by weight of chromium content. For example, as shown in Figure 2, the means for reducing the chromium gradient may include three different weld wires 18, 20, 22.

The first weld wire 18 is proximate to and/or in contact with the low alloy steel component 14. The first weld wire 18 may include a 2CrMo wire, a 2CrMoV wire, or a 2CrMoW wire. The first weld wire may contain the following elements: approximately 0.10-0.15% by weight carbon, 2.0-4.0% by weight chromium, 0.5-1.0% by weight molybdenum, 0.15-0.30% by weight vanadium, and/or 0.15-0.30% by weight tungsten.

The second weld wire 20 is proximate to and/or in contact with the high alloy steel component 16, which may be a stainless steel component. The second weld wire 20 may include approximately 0.0.10-0.20% by weight carbon, 8.0-10.0% by weight chromium, 0.5-1.0% by weight molybdenum, 0.5-2.50% by weight nickel, and/or 0.15-0.20% by weight vanadium.

The third weld wire 22 is between the first and second weld wires 18, 20. The third weld wire 22 may include approximately 0.08% by weight carbon, 5-10% and preferably 5.0-7.0% by weight chromium, 0.5-1.0% by weight molybdenum, 0.5-2.5% by weight nickel, and/or less than 0.20% by weight vanadium.

The means for reducing the chromium gradient between the low alloy steel component 14 and the high alloy steel component 16 may be applied using any conventional method known in the art for welding components. For example, arc welding, TIG (GTAW) welding, MIG welding, laser welding, or a hybrid combination of welding techniques may be used to apply the means for reducing the chromium gradient between the low alloy steel component 14 and the high alloy steel component 16. In practice, the first weld wire 18 may be applied directly to the low alloy steel component 14; the second weld wire 20 may be applied directly to the high alloy steel component 16, and the third weld wire 22 may be applied between the first and second weld wires 18, 20. The first, second, and third weld wires 18, 20, 22 may be applied in any order, or they may be applied simultaneously in one weld bead. One of ordinary skill in the art will appreciate that the means for reducing the chromium gradient between the low alloy steel component 14 and the high alloy steel component 16 may include more than three weld wires. For example, as shown in Figure 3, the means for reducing the chromium gradient between the low alloy steel component 14 and the high alloy steel component 16 may include five weld wires. As previously described with respect to the embodiment shown in Figure 2, the first weld wire 18 may be applied directly to the low alloy steel component 14; the second weld wire 20 may be applied directly to the high alloy steel component 16, and the third weld wire 22 may be applied between the first and second weld wires 18, 20. Fourth and fifth weld wires 24, 26 may be applied between the first and third weld wires 18, 22 and the third and second weld wires 22, 20, respectively. As before, the five weld wires 18, 20, 22, 24, 26 may include suitable amounts of carbon, molybdenum, nickel, and vanadium, with progressively increasing percentages by weight of chromium from the low alloy steel component 14 to the high alloy steel component 16.

The various embodiments of the present invention thus gradually increase the chromium content from the level present in the low alloy steel component 14 to the level present in the high alloy steel component 16. As a result, the various embodiments gradually reduce the chromium gradient between the low alloy steel component 14 and the high alloy steel component 16 to reduce the potential for carbon diffusion or carbon segregation across the weld joint 12. In addition, the gradual increase in chromium content from the low alloy steel component 14 to the high alloy steel component 16 results in a corresponding gradual increase in the thermal expansion coefficient values across the weld joint 12. The gradual increase in chromium content thus results in increased tensile strength and creep strength of the weld joint 12. As a result of the increased tensile strength and creep strength across the weld joint 12, the weld joint 12 may be used in higher temperature environments than previously allowed.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

For completeness, various aspects of the invention are now set out in the following numbered clauses:
1. A weld joint, comprising:
   a. a low alloy steel component, wherein the low alloy steel component comprises less than approximately 4.0% chromium by weight;
   b. a high alloy steel component, wherein the high alloy steel component comprises more than approximately 9.0% chromium by weight;
   c. a weld bead between the low and high alloy steel components, wherein the weld bead comprises a first weld wire in contact with the low alloy steel component, a second weld wire in contact with the high alloy steel component, and a third weld wire between the first and second weld wires; and
   d. wherein the third weld wire has a higher percentage of chromium by weight than the first weld wire and a lower percentage of chromium by weight than the second weld wire.
2. The weld joint as in clause 1, wherein the low alloy steel component comprises less than approximately 2.5% chromium by weight.
3. The weld joint as in clause 1, wherein the first weld wire has a higher percentage of chromium by weight than the low alloy steel.
4. The weld joint as in clause 1, wherein the first weld wire has approximately 2-4% chromium by weight.
5. The weld joint as in clause 1, wherein the first weld wire comprises carbon, chromium, molybdenum, vanadium, and/or other elements such as tungsten.
6. The weld joint as in clause 1, wherein the second weld wire has a lower percentage of chromium by weight than the high alloy steel.
7. The weld joint as in clause 1, wherein the second weld wire has approximately 8-10% chromium by weight.
8. The weld joint as in clause 1, wherein the second weld wire comprises carbon, chromium, molybdenum, nickel, and vanadium.
9. The weld joint as in clause 1, wherein the third weld wire has approximately 5-7% chromium by weight.
10. The weld joint as in clause 1, wherein the third weld wire comprises carbon, chromium, nickel, molybdenum, and vanadium.
11. The weld joint as in clause 1, wherein the second weld wire has a higher thermal expansion coefficient value than the first weld wire
12. A weld joint, comprising:
   a. a low alloy steel component;
   b. a high alloy steel component;
   c. a chromium gradient between the low alloy steel component and the high alloy steel component; and
   d. means for reducing the chromium gradient between the low alloy steel component and the high alloy steel component.
13. The weld joint as in clause 12, wherein the low alloy steel component has less than approximately 2.2% chromium by weight.
14. The weld joint as in clause 12, wherein the high alloy steel component has more than approximately 9% chromium by weight.
15. The weld joint as in clause 12, wherein the means for reducing the chromium gradient between the low alloy steel component and the high alloy steel component comprises a first weld wire in contact with the low alloy steel component, wherein the first weld wire has a higher percentage of chromium by weight than the low alloy steel component.
16. The weld joint as in clause 15, wherein the means for reducing the chromium gradient between the low alloy steel component and the high alloy steel component comprises a second weld wire in contact with the high alloy steel component, wherein the second weld wire has a lower percentage of chromium by weight than the high alloy steel component.
17. The weld joint as in clause 16, wherein the means for reducing the chromium gradient between the low alloy steel component and the high alloy steel component comprises a third weld wire between the first and second weld wires, wherein the third weld wire has a higher percentage of chromium by weight than the first weld wire and a lower percentage of chromium by weight than the second weld wire.
18. A method for welding, comprising:
   a. applying a first weld wire to a low alloy steel component, wherein the first weld wire has a higher percentage of chromium by weight than the low alloy steel component;
   b. applying a second weld wire to a high alloy steel component, wherein the second weld wire has a lower percentage of chromium by weight than the high alloy steel component;
   c. applying a third weld wire between the first and second weld wires, wherein the third weld wire has a higher percentage of chromium by weight than the first weld wire and a lower percentage of chromium by weight than the second weld wire.
19. The method as in clause 18, further including applying the first weld wire directly to the low alloy steel component.
20. The method as in clause 18, further including simultaneously applying the first, second, and third weld wires.

## Claims

1. A weld joint 12, comprising:
a. a low alloy steel component 14, wherein the low alloy steel component 14 comprises less than approximately 4% chromium by weight;
b. a high alloy steel component 16, wherein the high alloy steel component 16 comprises more than approximately 9% chromium by weight;
c. a weld bead between the low and high alloy steel components 14, 16, wherein the weld bead comprises a first weld wire 18 in contact with the low alloy steel component 14, a second weld wire 20 in contact with the high alloy steel component 16, and a third weld wire 22 between the first and second weld wires 18, 20; and
d. wherein the third weld 22 wire has a higher percentage of chromium by weight than the first weld wire 18 and a lower percentage of chromium by weight than the second weld wire 20.

2. The weld joint 12 as in claim 1, wherein the low alloy steel component 14 comprises less than approximately 3.0% chromium by weight.

3. The weld joint 12 as claim 1 or 2, wherein the first weld wire 18 has a higher percentage of chromium by weight than the low alloy steel.

4. The weld joint 12 as in any of claims 1 through 3, wherein the first weld wire 18 has approximately 2-4% chromium by weight.

5. The weld joint 12 as in any of claims 1 through 4, wherein the first weld wire 18 comprises carbon, molybdenum, and vanadium.

6. The weld joint 12 as in any of claims 1 through 5, wherein the second weld wire 20 has a lower percentage of chromium by weight than the high alloy steel.

7. The weld joint 12 as in any of claims 1 through 6, wherein the second weld wire 20 has approximately 10-11% chromium by weight.

8. The weld joint 12 as in any of claims 1 through 7, wherein the second weld wire 20 comprises carbon, nickel, molybdenum, and vanadium.

9. The weld joint 12 as in any of claims 1 through 8, wherein the third weld wire 22 has approximately 5-10% chromium by weight.

10. The weld joint 12 as in any of claims 1 through 9, wherein the third weld wire 22 comprises carbon, nickel, molybdenum, and vanadium.

11. The weld joint 12 as in any of claims 1 through 10, wherein the second weld wire 20 has a higher thermal expansion coefficient value than the first weld wire 18.

12. A method for welding, comprising:
a. applying a first weld wire 18 to a low alloy steel component 14, wherein the first weld wire 18 has a higher percentage of chromium by weight than the low alloy steel component 14;
b. applying a second weld wire to a high alloy steel component 16, wherein the second weld wire 20 has a lower percentage of chromium by weight than the high alloy steel component 16;
c. applying a third weld wire 22 between the first and second weld wires 18, 20, wherein the third weld wire 22 has a higher percentage of chromium by weight than the first weld wire 18 and a lower percentage of chromium by weight than the second weld wire 20.

13. The method as in claim 12, further including applying the first weld wire 8 directly to the low alloy steel component

14. The method as in claim 12 or claim 13, further including simultaneously applying the first, second, and third weld wires 18, 20, 22.
